# EUROPEAN PATENT APPLICATION

(11) **EP 4 564 975 A1**
(43) Date of publication of application: **04.06.2025**
(21) Application number: 22952424.4
(22) Date of filing: 28.07.2022
(51) Int. Cl.: H04W 72/12

(54) **SL PRS TRANSMISSION METHOD AND APPARATUS THEREFOR**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/108752
(87) International publication number: WO 2024/020967

(57) **Abstract**

Disclosed in embodiments of the present application are an SL PRS transmission method and an apparatus therefor, for use in a communication system. The method comprises: determining priority information of SL PRS transmission; and according to the priority information of the SL PRS transmission, performing the SL PRS transmission with a second device. By implementing the embodiments of the present application, the priority information is configured for the SL PRS transmission, and the SL PRS transmission is performed on the basis of the priority information, so that SL PRS transmission is more precise, and the improvement of the rationality of the SL PRS transmission is facilitated. Furthermore, when a transmission conflict exists between the SL PRS transmission and UL transmission, the transmission conflict can be resolved on the basis of a priority relationship between the SL PRS transmission and the UL transmission, that is, the conflict risk of the SL PRS transmission and the UL transmission is reduced, and it can be ensured that transmission having high priority in the SL PRS transmission and the UL transmission is performed, and the packet loss amount can be reduced.

## Description

### TECHNICAL FIELD

The disclosure relates to the field of communication technologies, and in particular to a sidelink (SL) positioning reference signal (PRS) transmission method and device thereof.

### BACKGROUND

User equipments (UEs) communicate with each other through a sidelink (SL). The UE can be positioned through interaction with a plurality of road side units (RSUs) based on SL communication to determine the location of the UE. Therefore, researches mainly focus on how to transmit an SL positioning reference signal (PRS) in the process of SL-based positioning.

### SUMMARY

Embodiments of the disclosure provide a sidelink (SL) positioning reference signal (PRS) transmission method and device thereof, which makes SL PRS transmission more adaptable and reduces the risk of conflict between SL PRS transmission and uplink (UL) transmission based on the priority information of the SL PRS transmission in the process of SL PRS transmission.

According to a first aspect of embodiments of the disclosure, an SL PRS transmission method is provided. The method includes:
determining priority information of SL PRS transmission; and
performing the SL PRS transmission with a second device according to the priority information of the SL PRS transmission.

In this technical solution, the priority information is configured for the SL PRS transmission, and the SL PRS transmission is carried out based on the priority information, which makes the SL PRS transmission more accurate and is beneficial to improving the rationality of the SL PRS transmission. Moreover, the transmission based on the priority information can reduce the conflict risk between the SL PRS transmission and the UL transmission.

According to a second aspect of embodiments of the disclosure, a communication device is provided. The communication device includes:
a processing module, configured to determine priority information of SL PRS transmission; and
a transceiver module, configured to perform the SL PRS transmission with a second device according to the priority information of the SL PRS transmission.

According to a third aspect of embodiments of the disclosure, a communication device is provided. The communication device has an ability to implement part or all of the functions of the terminal in the method described in the first aspect. For example, the communication device may have functions of some or all of embodiments of the disclosure, or may have a function of independently implementing any embodiment of the disclosure. The functions can be implemented by hardware, or can be implemented by executing corresponding software using the hardware. The hardware or software includes one or more units or modules corresponding to the above functions.

In an implementation, the communication device includes: a transceiver module and a processing module. The processing module is configured to support the communication device to perform corresponding functions in the above method. The transceiver module is configured to support communication between the communication device and other devices. The communication device may further include a storage module that is coupled to the transceiver module and the processing module, and is configured to store necessary computer programs and data for the communication device.

According to a fourth aspect of embodiments of the disclosure, another communication device is provided. The communication device has an ability to implement part or all of the functions of the network device in the method described in the second aspect. For example, the communication device may have functions of some or all of embodiments of the disclosure, or may have a function of independently implementing any embodiment of the disclosure. The functions can be implemented by hardware, or can be implemented by executing corresponding software using the hardware. The hardware or software includes one or more units or modules corresponding to the above functions.

In an implementation, the communication device includes: a transceiver module and a processing module. The processing module is configured to support the communication device to perform corresponding functions in the above method. The transceiver module is configured to support communication between the communication device and other devices. The communication device may further include a storage module that is coupled to the transceiver module and the processing module, and is configured to store necessary computer programs and data for the communication device.

According to a fifth aspect of embodiments of the disclosure, a communication device is provided. The communication device includes: a processor. When the processor calls a computer program stored in a memory, the method described in the first aspect above is implemented.

According to a sixth aspect of embodiments of the disclosure, a communication device is provided. The communication device includes: a processor. When the processor calls a computer program stored in a memory, the method described in the second aspect above is implemented.

According to a seventh aspect of embodiments of the disclosure, a communication device is provided. The communication device includes: a processor and a memory having a computer program stored therein. When the processor executes the computer program stored in the memory, the communication device is caused to implement the method described in the first aspect above.

According to an eighth aspect of embodiments of the disclosure, a communication device is provided. The communication device includes: a processor and a memory having a computer program stored therein. When the processor executes the computer program stored in the memory, the communication device is caused to implement the method described in the second aspect above.

According to a ninth aspect of embodiments of the disclosure, a communication device is provided. The communication device includes: a processor and an interface circuit. The interface circuit is configured to receive code instructions and transmit the code instructions to the processor. The processor is configured to run the code instructions to cause the device to perform the method described in the first aspect above.

According to a tenth aspect of embodiments of the disclosure, a communication device is provided. The communication device includes: a processor and an interface circuit. The interface circuit is configured to receive code instructions and transmit the code instructions to the processor. The processor is configured to run the code instructions to cause the device to perform the method described in the second aspect above.

According to an eleventh aspect of embodiments of the disclosure, a communication system is provided. The system includes the communication device of the third aspect and the communication device of the fourth aspect; or the system includes the communication device of the fifth aspect and the communication device of the sixth aspect; or the system includes the communication device of the seventh aspect and the communication device of the eighth aspect; or the system includes the communication device of the ninth aspect and the communication device of the tenth aspect.

According to a twelfth aspect of embodiments of the disclosure, a computer-readable storage medium is provided. The computer-readable storage medium is configured to store instructions used by the above terminal. When the instructions are executed, the terminal is caused to implement the method of the first aspect.

According to a thirteenth aspect of embodiments of the disclosure, a readable storage medium is provided. The readable storage medium is configured to store instructions used by the above network device. When the instructions are executed, the network device is caused to implement the method of the second aspect.

According to a fourteenth aspect of embodiments of the disclosure, a computer program product including a computer program is provided. When the computer program is running on a computer, the computer is caused to implement the method of the first aspect.

According to a fifteenth aspect of embodiments of the disclosure, a computer program product including a computer program is provided. When the computer program is running on a computer, the computer is caused to implement the method of the second aspect.

According to a sixteenth aspect of embodiments of the disclosure, a chip system is provided. The chip system includes at least one processor and an interface for supporting the terminal in realizing the functions involved in the first aspect, e.g., determining or processing at least one of data or information involved in the method described above. In a possible design, the chip system further includes a memory. The memory is configured to store necessary computer programs and data of the terminal. The chip system may consist of chips or may include a chip and other discrete components.

According to a seventeenth aspect of embodiments of the disclosure, a chip system is provided. The chip system includes at least one processor and an interface for supporting the network device in realizing the functions involved in the second aspect, e.g., determining or processing at least one of data or information involved in the method described above. In a possible design, the chip system further includes a memory. The memory is configured to store necessary computer programs and data of the network device. The chip system may consist of chips or may include a chip and other discrete components.

According to an eighteenth aspect of embodiments of the disclosure, a computer program is provided. When the computer program is running on a computer, the computer is caused to implement the method of the first aspect.

According to a nineteenth aspect of embodiments of the disclosure, a computer program is provided. When the computer program is running on a computer, the computer is caused to implement the method of the second aspect.

### BRIEF DESCRIPTION OF THE DRAWINGS

In order to clearly illustrate technical solutions of embodiments of the disclosure or background technologies, a description of drawings used in the embodiments or the background technologies is given below.
FIG. 1 is a schematic diagram of a communication system provided by an embodiment of the disclosure.
FIG. 2 is a flowchart of a sidelink (SL) positioning reference signal (PRS) transmission method provided by an embodiment of the disclosure.
FIG. 3 is a flowchart of another SL PRS transmission method provided by an embodiment of the disclosure.
FIG. 4 is a flowchart of another SL PRS transmission method provided by an embodiment of the disclosure.
FIG. 5 is a flowchart of another SL PRS transmission method provided by an embodiment of the disclosure.
FIG. 6 is a flowchart of another SL PRS transmission method provided by an embodiment of the disclosure.
FIG. 7 is a flowchart of another SL PRS transmission method provided by an embodiment of the disclosure.
FIG. 8 is a flowchart of another SL PRS transmission method provided by an embodiment of the disclosure.
FIG. 9 is a flowchart of another SL PRS transmission method provided by an embodiment of the disclosure.
FIG. 10 is a flowchart of another SL PRS transmission method provided by an embodiment of the disclosure.
FIG. 11 is a schematic diagram of a communication device provided by an embodiment of the disclosure.
FIG. 12 is a schematic diagram of another communication device provided by an embodiment of the disclosure.
FIG. 13 is a schematic diagram of a chip provided by an embodiment of the disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise indicated. The implementations configured forth in the following description of embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the embodiments of the disclosure. The singular forms of "a" and "the" used in the disclosure and appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the disclosure to describe various information, the information should not be limited to these terms. These terms are only used to distinguish the same type of information from each other. For example, without departing from the scope of the embodiments of the disclosure, the first information may also be referred to as the second information, and similarly, the second information may also be referred to as the first information. Depending on the context, the term "if" as used herein may be interpreted as "when", "while" or "in response to determining". For the purposes of brevity and ease of understanding, the terms "greater than" or "less than", "higher than" or "lower than" are used herein to represent size relationships. Those skilled in the art understand that the term "greater than" also covers the meaning of "greater than or equal to", the term "less than" also covers the meaning of "less than or equal to", the term "higher than" also covers the meaning of "higher than or equal to", and the term "lower than" also covers the meaning of "lower than or equal to".

For ease of understanding, the terms involved in the disclosure are first introduced.

Quality of Service (QoS) refers to probability that a network will meet a given service contract, or in many cases, it is informally used to refer to probability that a packet will pass between two points in the network. The QoS is a control mechanism, which provides different priorities for different users or data streams, or ensures the performance of a data stream to reach a certain level according to a requirement of an application.

A positioning reference signal (PRS) is used for positioning measurement, and a positioning device can perform positioning based on a measurement result.

In order to better understand a sidelink (SL) PRS transmission method disclosed in the embodiments of the disclosure, a communication system to which the embodiments of the disclosure is applicable is described below at first.

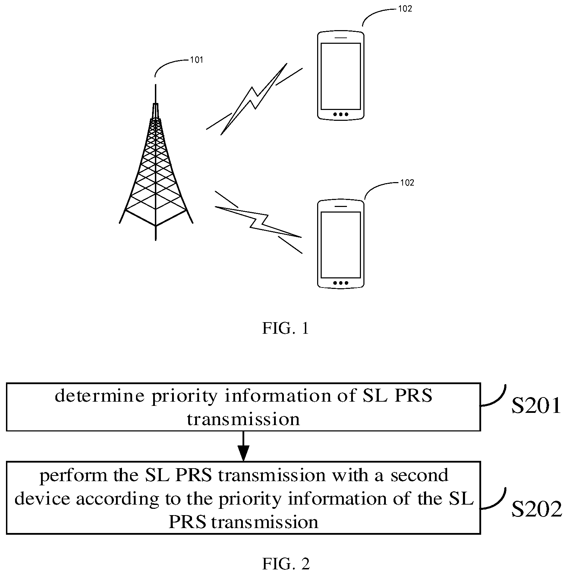

FIG. 1 is a schematic diagram of a communication system provided by an embodiment of the disclosure. The communication system may include, but is not limited to, one network device and one terminal. The number and the form of devices illustrated in FIG. 1 are only for examples and do not constitute a limitation on the embodiments of the disclosure, and two or more network devices and two or more terminals may be included in practical applications. The communication system illustrated in FIG. 1 includes, for example, a network device 101 and a terminal 102.

It is noteworthy that the technical solution of the embodiments of the disclosure can be applied to various communication systems, such as, a long term evolution (LTE) system, a 5th generation (5G) mobile communication system, a 5G new radio (NR) system, or other future new mobile communication systems. It should also be noted that the SL in the embodiments of the disclosure may also be called a side link or a direct link.

The network device 101 in the embodiments of the disclosure is an entity on a network side for transmitting or receiving signals. For example, the network device 101 may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network device are not limited in the embodiments of the disclosure. The network device according to the embodiments of the disclosure may be composed of a central unit (CU) and a distributed unit (DU). The CU may also be called control unit. The use of CU-DU structure allows to divide a protocol layer of the network device, such as a base station, such that some of the protocol layer functions are placed in the CU for centralized control, and some or all of the remaining protocol layer functions are distributed in the DU, which is centrally controlled by the CU.

The terminal 102 in the embodiments of the disclosure is an entity on a user side for receiving or transmitting signals, such as a cellular phone. The terminal may also be referred to as terminal, user equipment (UE), mobile station (MS), mobile terminal (MT), and the like. The terminal may be a car with communication functions, a smart car, a mobile phone, a wearable devices, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in the embodiments of the disclosure.

In an SL communication, there are four kinds of SL transmission modes, in which SL transmission mode 1 and SL transmission mode 2 are used for device-to-device (D2D) communication, and SL transmission mode 3 and SL transmission mode 4 are used for Vehicle to Everything (V2X) communication. When the SL transmission mode 3 is adopted, resource allocation is scheduled by the network device 101. In detail, the network device 101 sends resource allocation information to the terminal 102, and then the terminal 102 allocates resources to another terminal, so that the other terminal can send information to the network device 101 through the allocated resources. In the V2X communication, the terminal device 102 is usually a terminal with better signal or higher reliability. The first terminal mentioned in the embodiments of the disclosure may refer to the terminal 102, and the second terminal may refer to the other terminal.

It is understandable that the communication system described in the embodiments of the disclosure is intended to clearly illustrate the technical solution according to the embodiments of the disclosure, and does not constitute a limitation on the technical solution according to the embodiments of the disclosure. It is understandable by those skilled in the art that as system architectures evolve and new business scenarios emerge, the technical solution according to the embodiments of the disclosure is also applicable to similar technical problems.

It should be noted that the SL PRS transmission method provided by any embodiment of the disclosure can be performed alone, or performed in combination with possible implementations in other embodiments, or performed in combination with any technical solution in the related art.

The SL PRS transmission method and device thereof provided in the disclosure will be introduced in detail in combination with the attached drawings.

FIG. 2 is a flowchart of an SL PRS transmission method provided by an embodiment of the disclosure. The SL PRS transmission method is performed by a first device. As illustrated in FIG. 2, the method includes the following steps.

At step S201, priority information of SL PRS transmission is determined.

In an embodiment of the disclosure, the SL PRS transmission may include SL PRS sending and SL PRS receiving.

Optionally, the first device may be one of a primary positioning assistance UE, a positioning assistance UE or a UE to be located. Optionally, there may be different types of positioning assistance UEs. For example, the positioning assistance UE may be a road side unit (RSU)-type positioning assistance UE, which provides a positioning service by collaborating with other RSUs. For another example, the positioning assistance UE may be an ordinary UE. In some implementations, some positioning assistance UEs have a global positioning system (GPS) for acquiring location information, which may assist other UEs in absolute positioning. There are other positioning assistance UEs that do not have the GPS for acquiring location information.

Optionally, the priority information of the SL PRS transmission may include a priority value and/or a value range of the SL PRS transmission. The priority value is a certain value within the value range. For example, the value range may be [1,9], so the value of the priority of the SL PRS transmission may be 1, 2, 3, ... 9. For another example, the value range may be [1,8], so the value of the priority of the SL PRS transmission may be 1, 2, 3, ... 8.

Optionally, the priority information of the SL PRS transmission may include an SL PRS identifier (ID) or an SL PRS set ID. A SL PRS set may include one or more SL PRSs. The priority information may include the SL PRS set ID. The SL PRS ID is used to uniquely identify an SL PRS. In some implementations, the priority of the SL PRS transmission is determined based on the SL PRS ID or SL PRS set ID. For example, the priorities of different SL PRS IDs or SL PRS set IDs may be pre-configured or agreed by a protocol.

Optionally, the priority information of the SL PRS transmission may include QoS information of an SL positioning service corresponding to an SL PRS. In this embodiment of the disclosure, the priority of the SL PRS transmission may be determined by the QoS of the SL positioning service. For example, when the QoS information indicates that the QoS corresponding to the SL positioning service is good, the SL PRS corresponding to the SL positioning service is sent preferentially, or when the QoS information indicates that the QoS corresponding to the SL positioning service is poor, the SL PRS corresponding to the SL positioning service is sent with delay.

Optionally, the priority information of the SL PRS transmission may include priority information of each SL PRS ID or priority information of each SL PRS set ID. That is, the priority information of the SL PRS transmission may include an SL PRS ID and a priority value corresponding to the SL PRS ID, and/or, the priority information of the SL PRS transmission may include an SL PRS set ID and a priority value corresponding to the SL PRS set ID.

The SL PRS transmission includes the SL PRS sending and the SL PRS receiving. Optionally, the priority information of the SL PRS transmission may be priority information of the SL PRS sending and priority information of the SL PRS receiving.

It should be noted that the priority information of the SL PRS transmission may include at least one of the above information. That is, the priority information of the SL PRS transmission may include combinations of one or more of the priority value of the SL PRS transmission, the value range of the priority, the SL PRS ID, the SL PRS set ID, the priority information of each SL PRS ID, the priority information of each SL PRS set ID, the priority information of the SL PRS sending or the priority information of SL PRS receiving.

As an implementation, the first device may receive the priority information of the SL PRS transmission sent by a third device. The third device is at least one of a second device, a positioning assistance device or a network device. Optionally, the second device may be a peer-end device directly connected with the first device through SL, which may be a terminal or an RSU. The positioning assistance device may be an RSU or a location management function (LMF) network element.

As another implementation, the first device may determine the priority information of the SL PRS transmission by itself according to a protocol. For example, the first device may determine the priority information of the SL PRS transmission based on the QoS information of the SL positioning service corresponding to the SL PRS transmission.

In an embodiment of the disclosure, the SL PRS transmission includes the SL PRS sending and the SL PRS receiving, and the first device may determine priority information of SL PRS sending and priority information of SL PRS receiving respectively.

In a case that the priority information of the SL PRS transmission is determined through network indication, optionally, the first device may receive the priority information of the SL PRS transmission sent by a third device. Optionally, the first device may also receive the priority information of the SL PRS receiving sent by the third device. Optionally, the first device may receive the priority information of the SL PRS sending and the priority information of the SL PRS receiving sent by the third device.

In a case that the priority information of the SL PRS transmission is determined by the first device itself, optionally, the first device may determine the priority information of the SL PRS sending and the priority information of the SL PRS receiving respectively according to the QoS information of the SL positioning service corresponding to SL PRS transmission.

At step S202, the SL PRS transmission is performed with a second device according to the priority information of the SL PRS transmission.

Optionally, the first device determines the priority of the SL PRS transmission according to the priority information of the SL PRS transmission, and performs the SL PRS transmission with the second device based on the priority of the SL PRS transmission.

In some implementations, the first device may determine the priority of the SL PRS transmission based on a priority value in the priority information of the SL PRS transmission.

In some implementations, the first device may determine the priority of the SL PRS transmission based on the SL PRS ID or the SL PRS set ID in the priority information of the SL PRS transmission. For example, a priority list may be queried based on the SL PRS ID or the SL PRS set ID to determine the priority corresponding to the SL PRS ID or the SL PRS set ID. The priority is the priority of the SL PRS transmission identified by the SL PRS ID or the SL PRS set ID. The priority list may be pre-configured by the network device, or agreed upon by a protocol or preconfigured by the first device.

In some implementations, the first device may determine the priority of the SL PRS transmission identified by the SL PRS ID based on the SL PRS ID and the priority information of the SL PRS ID in the priority information of the SL PRS transmission. Alternatively, the first device may determine the priority of the SL PRS transmission identified by the SL PRS set ID based on the SL PRS set ID and the priority information of the SL PRS set ID in the priority information of the SL PRS transmission.

In some implementations, the first device determines the priority of the SL PRS transmission based on the QoS information of the SL positioning service corresponding to SL PRS transmission in the priority information of the SL PRS transmission.

It should be noted that the first device may determine at least one of the priority of the SL PRS sending or the priority of the SL PRS receiving in SL PRS transmission according to the above implementations.

In some implementations, the first device may act as a transmitter to determine the priority of the SL PRS sending and the priority of the SL PRS receiving. Alternatively, the transmitter may determine the priority of the SL PRS sending, and the priority of the SL PRS receiving is determined by the peer-end device for the first device, that is, a receiver determines the priority of the SL PRS receiving.

In other implementations, the first device may act as a receiver to determine the priority of the SL PRS sending and the priority of the SL PRS receiving. Alternatively, the receiver may determine the priority of the SL PRS sending, and the priority of the SL PRS receiving is determined by the peer-end device for the first device, that is, a transmitter determines the priority of the SL PRS receiving.

In other words, the priority of the SL PRS sending and the priority of the SL PRS receiving can both be determined by the transmitter. Alternatively, the priority of the SL PRS sending and the priority of the SL PRS receiving are both determined by the receiver. Alternatively, the priority of the SL PRS sending is determined by the transmitter, and the priority of the SL PRS receiving is determined by the receiver. Alternatively, the priority of the SL PRS sending is determined by the receiver, and the priority of the SL PRS receiving is determined by the transmitter.

In an embodiment of the disclosure, the first device may perform the SL PRS transmission with the second device according to the priority of the SL PRS transmission. For example, when the SL PRS transmission and the UL transmission both need to be performed, the SL PRS transmission and the UL transmission can be performed sequentially based on the priority of the SL PRS transmission and the priority of the UL transmission, or transmission with a higher priority is selected from SL PRS transmission and UL transmission and is performed. For another example, when more than one SL PRS transmission need to be performed, the more than one SL PRS transmission is performed sequentially based on a priority of each SL PRS, or SL PRS transmission with a higher priority is selected from the more than one SL PRS transmission and is performed.

Optionally, the second device may be one of a primary positioning assistance UE, a positioning assistance UE or a UE to be located. It should be noted that the second device is a peer-end device for the first device. For example, when the first device is a primary positioning assistance UE, the second device is a UE to be located.

In the embodiments of the disclosure, the first device determines the priority information of the SL PRS transmission, and performs the SL PRS transmission with the second device according to the priority information of the SL PRS transmission. In the embodiments of the disclosure, the priority information is configured for the SL PRS transmission, and the SL PRS transmission is performed based on the priority information, which makes the SL PRS transmission more accurate and is beneficial to improving the rationality of the SL PRS transmission. Moreover, the transmission based on the priority information can reduce the conflict risk between the SL PRS transmission and the UL transmission.

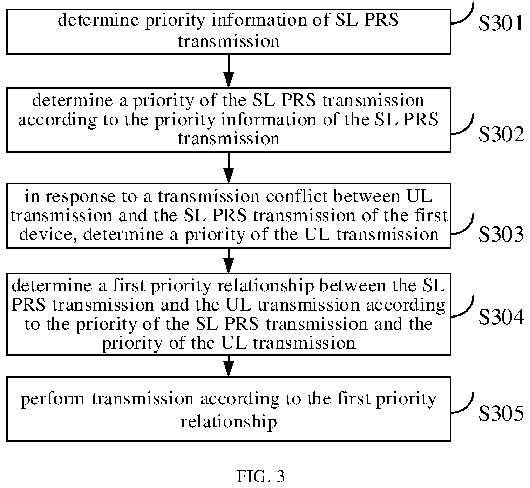

FIG. 3 is a flowchart of an SL PRS transmission method provided by an embodiment of the disclosure. The SL PRS transmission method is performed by a first device. As illustrated in FIG. 3, the method includes but is not limited to the following steps.

At step S301, priority information of SL PRS transmission is determined.

At step S302, a priority of the SL PRS transmission is determined according to the priority information of the SL PRS transmission.

Detailed description of steps S301-S302 can be referred to the description of related contents in the above embodiments, and will not be repeated here.

At step S303, in response to a transmission conflict between UL transmission and the SL PRS transmission of the first device, a priority of the UL transmission is determined.

Optionally, when the first device performs the SL PRS transmission and the UL transmission, there may be a transmission conflict between the SL PRS transmission and the UL transmission. For example, the first device may not be able to perform the SL PRS transmission and the UL transmission simultaneously, that is, only one of the SL PRS transmission and the UL transmission can be performed at one time. For another example, although the first device may be able to perform the SL PRS transmission and the UL transmission simultaneously, there is a transmission conflict between the SL PRS transmission and the UL transmission in time, that is, transmission times corresponding to the SL PRS transmission and the UL transmission are partially overlapped.

In a case that there is a transmission conflict between the SL PRS transmission and the UL transmission of the first device, the first device may determine the priority of the UL transmission. Optionally, the first device may determine the priority of the UL transmission based on a protocol agreement or network configuration. For example, the network may configure identification information of UL transmission and a priority corresponding to the identification information. For another example, the first device may determine the priority of the UL transmission based on a channel state of the UL channel.

It is noted that UL transmission includes one of following set UL transmissions:
transmission of a physical random access channel (PRACH);
transmission and retransmission of a random access response (RAR) UL grant scheduled physical UL shared channel (PUSCH);
transmission and retransmission of a PUSCH corresponding to a Type-2 random access;
transmission of a physical uplink control channel (PUCCH) carrying an RAR or SL Hybrid Automatic Repeat request acknowledgement (HARQ-ACK); or
transmission of a PUCCH carrying downlink control information (DCI) scrambled by a Temporary Cell-Radio Network Temporary Identity (TC-RNTI).

Optionally, the UL transmission may also be another UL transmission in addition to the above-mentioned set UL transmission.

At step S304, a first priority relationship between the SL PRS transmission and the UL transmission is determined according to the priority of the SL PRS transmission and the priority of the UL transmission.

After determining the priority of the SL PRS transmission and the priority of the UL transmission, the first device compares the priority of the SL PRS transmission and the priority of the UL transmission to determine the first priority relationship between the SL PRS transmission and the UL transmission. The first priority relationship may be that the priority of the SL PRS transmission is higher than that of the UL transmission, or the first priority relationship may be that the priority of the SL PRS transmission is lower than that of the UL transmission.

That is, the priority of the SL PRS transmission may be lower than that of the PRACH transmission, the RAR UL grant scheduled PUSCH transmission and retransmission, the Type-2 random access PUSCH transmission and retransmission, the transmission of the PUCCH carrying a success RAR or SL HARQ-ACK, or the transmission of the PUCCH indicated by DCI scrambled by a TC-RNTI. Alternatively, the priority of the SL PRS transmission may be higher than that of the PRACH transmission, the RAR UL grant scheduled PUSCH transmission and retransmission, the Type-2 random access PUSCH transmission and retransmission, the transmission of the PUCCH carrying a success RAR or SL HARQ-ACK, or the transmission of the PUCCH indicated by DCI scrambled by a TC-RNTI.

Optionally, the priority of the SL PRS transmission may be higher than a priority of another UL transmission other than the above set UL transmissions, including the PRACH transmission, the RAR UL grant scheduled PUSCH transmission and retransmission, the Type-2 random access PUSCH transmission and retransmission, the transmission of the PUCCH carrying a success RAR or SL HARQ-ACK, or the transmission of the PUCCH indicated by DCI scrambled by a TC-RNTI. Alternatively, the priority of the SL PRS transmission may be lower than the priority of another UL transmission other than the above set UL transmissions, including the PRACH transmission, the RAR UL grant scheduled PUSCH transmission and retransmission, the Type-2 random access PUSCH transmission and retransmission, the transmission of the PUCCH carrying a success RAR or SL HARQ-ACK, or the transmission of the PUCCH indicated by DCI scrambled by a TC-RNTI.

At step S305, transmission is performed according to the first priority relationship.

After determining the first priority relationship between the SL PRS transmission and the UL transmission, the first device performs the SL PRS transmission with the second device based on the first priority relationship. If the priority of the SL PRS transmission is higher than that of the UL transmission, the first device performs the SL PRS transmission with the second device preferentially. If the priority of the SL PRS transmission is lower than that of the UL transmission, the first device performs the UL transmission with another device preferentially.

In the embodiments of the disclosure, the first device determines the priority information of the SL PRS transmission, and performs the SL PRS transmission with the second device according to the priority information of the SL PRS transmission. In the embodiments of the disclosure, the priority information is configured for the SL PRS transmission, and the SL PRS transmission is performed based on the priority information, which makes the SL PRS transmission more accurate and is beneficial to improving the rationality of the SL PRS transmission. Moreover, when there is a transmission conflict between the SL PRS transmission and the UL transmission, the transmission conflict can be solved based on the priority relationship between the two kinds of transmission, which reduces the conflict risk between the SL PRS transmission and the UL transmission, ensures that the transmission with a higher priority in the SL PRS transmission and the UL transmission is performed, and reduces the packet loss.

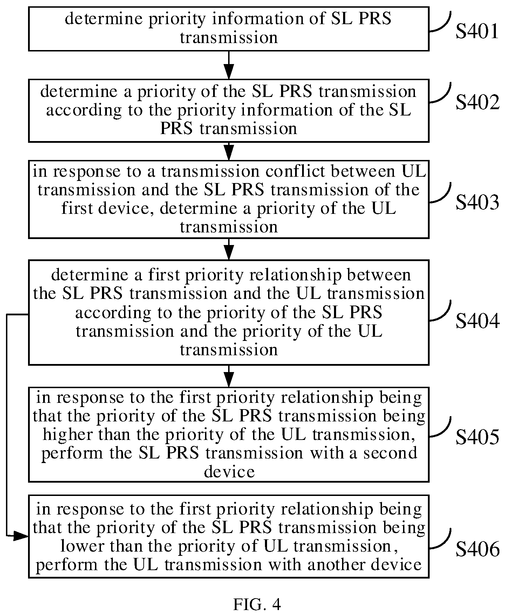

FIG. 4 is a flowchart of an SL PRS transmission method provided by an embodiment of the disclosure. The SL PRS transmission method is performed by a first device. As illustrated in FIG. 4, the method includes but is not limited to the following steps.

At step S401, priority information of SL PRS transmission is determined.

At step S402, a priority of the SL PRS transmission is determined according to the priority information of the SL PRS transmission.

Detailed description of steps S401-S402 can be referred to the description of related contents in the above embodiments, and will not be repeated here.

At step S403, in response to a transmission conflict between UL transmission and the SL PRS transmission of the first device, a priority of the UL transmission is determined.

The SL PRS transmission is sent or received via an SL communication interface, and the UL transmission is sent via a Uu interface. In an embodiment of the disclosure, in a case that the first device cannot send/receive an SL PRS and send UL via the Uu interface at the same time, this transmission conflict can be solved based on the priorities of the SL PRS transmission and the UL transmission, so that the first device may determine the priority of the UL transmission. The process of determining the priority of the UL transmission by the first device can be referred to the description of related contents in the above embodiments, and the details are not repeated here.

At step S404, a first priority relationship between the SL PRS transmission and the UL transmission is determined according to the priority of the SL PRS transmission and the priority of the UL transmission.

After determining the priorities of the SL PRS transmission and the UL transmission, the first device compare the priorities of the SL PRS transmission and the UL transmission to determine the first priority relationship between the SL PRS transmission and the UL transmission. The first priority relationship may be that the priority of the SL PRS transmission is higher than that of the UL transmission, or the first priority relationship may be that the priority of the SL PRS transmission is lower than that of the UL transmission.

At step S405, in response to the first priority relationship being that the priority of the SL PRS transmission being higher than the priority of the UL transmission, the SL PRS transmission is performed with a second device; or

At step S406, in response to the first priority relationship being that the priority of the SL PRS transmission being lower than the priority of the UL transmission, the UL transmission is performed with another device.

When the first priority relationship is that the priority of the SL PRS transmission is lower than that of the UL transmission, the first device may perform the UL transmission with another device, which may be a network device such as a base station. It should be noted that the first device performs the UL transmission with the network device through the Uu interface.

In the embodiments of the disclosure, the priority information of the SL PRS transmission is determined, and the SL PRS transmission is performed with the second device according to the priority information of the SL PRS transmission. In the embodiments of the disclosure, the priority information is configured for the SL PRS transmission, and the SL PRS transmission is performed based on the priority information, which makes the SL PRS transmission more accurate and is beneficial to improving the rationality of the SL PRS transmission. Moreover, when there is a transmission conflict between the SL PRS transmission and the UL transmission, the transmission conflict can be solved based on the priority relationship between the two kinds of transmission, which reduces the conflict risk between the SL PRS transmission and the UL transmission, ensures that the transmission with a higher priority in the SL PRS transmission and the UL transmission is performed, and reduces the packet loss.

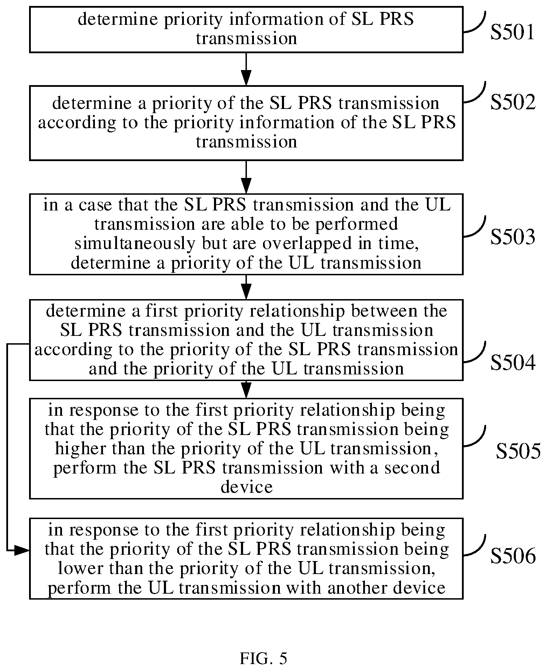

FIG. 5 is a flowchart of an SL PRS transmission method provided by an embodiment of the disclosure. The SL PRS transmission method is performed by a first device. As illustrated in FIG. 5, the method includes but is not limited to the following steps.

At step S501, priority information of SL PRS transmission is determined.

At step S502, a priority of the SL PRS transmission is determined according to the priority information of the SL PRS transmission.

Detailed description of steps S501-S502 can be referred to the description of related contents in the above embodiments, and will not be repeated here.

At step S503, in a case that the SL PRS transmission and the UL transmission are able to be performed simultaneously but are overlapped in time, a priority of the UL transmission is determined.

In an embodiment of the disclosure, the first device can send/receive the SL PRS and send the UL at a Uu port simultaneously, but the transmission times corresponding to SL PRS transmission and UL transmission are partially overlapped in time. The first device needs to solve this transmission conflict based on the priorities of the SL PRS transmission and the UL transmission, so that the first device may determine the priority of the UL transmission. The process of determining the priority of the UL transmission by the first device can be referred to the description of related contents in the above embodiments, and details are not repeated here.

At step S504, a first priority relationship between the SL PRS transmission and the UL transmission is determined according to the priority of the SL PRS transmission and the priority of the UL transmission.

Detailed description of step S504 can be referred to the description of related contents in the above embodiments, and will not be repeated here.

At step S505, in response to the first priority relationship being that the priority of the SL PRS transmission being higher than the priority of the UL transmission, the SL PRS transmission is performed with a second device; or

At step S506, in response to the first priority relationship being that the priority of the SL PRS transmission being lower than the priority of the UL transmission, the UL transmission is performed with another device.

Detailed description of steps S505-S506 can be referred to the description of related contents in the above embodiments, and will not be repeated here.

In the embodiments of the disclosure, the priority information of the SL PRS transmission is determined, and the SL PRS transmission is performed with the second device according to the priority information of the SL PRS transmission. In the embodiments of the disclosure, the priority information is configured for the SL PRS transmission, and the SL PRS transmission is performed based on the priority information, which makes the SL PRS transmission more accurate and is beneficial to improving the rationality of the SL PRS transmission. Moreover, when there is a transmission conflict between the SL PRS transmission and the UL transmission, the transmission conflict can be solved based on the priority relationship between the two kinds of transmission, which reduces the conflict risk between the SL PRS transmission and the UL transmission, ensures that the transmission with a higher priority in the SL PRS transmission and the UL transmission is performed, and reduces the packet loss.

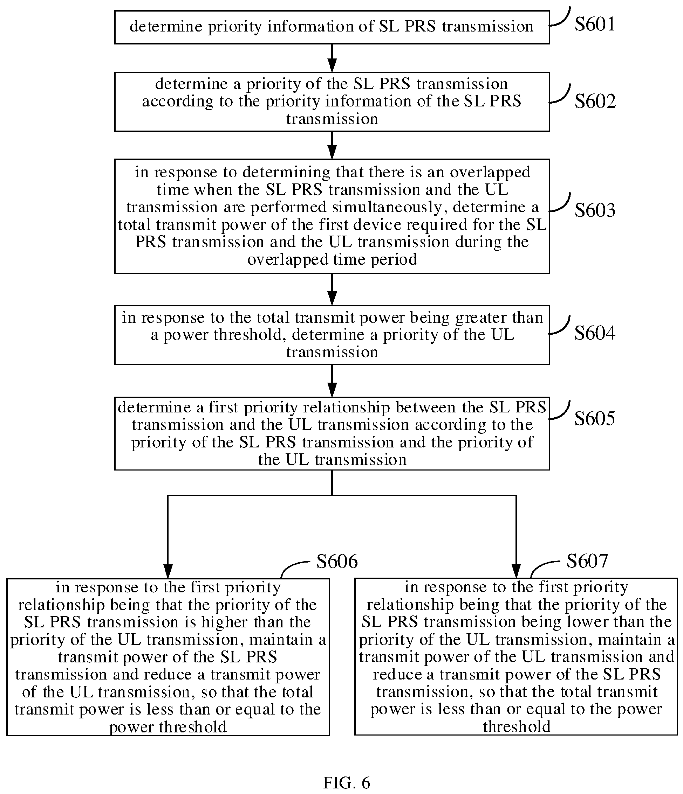

FIG. 6 is a flowchart of an SL PRS transmission method provided by an embodiment of the disclosure. The SL PRS transmission method is performed by a first device. As illustrated in FIG. 6, the method includes but is not limited to the following steps.

At step S601, priority information of SL PRS transmission is determined.

At step S602, a priority of the SL PRS transmission is determined according to the priority information of the SL PRS transmission.

Detailed description of steps S601-S602 can be referred to the description of related contents in the above embodiments, and will not be repeated here.

At step S603, in response to determining that there is an overlapped time period when the SL PRS transmission and the UL transmission are performed simultaneously, a total transmit power of the first device required for the SL PRS transmission and the UL transmission during the overlapped time period is determined.

In this embodiment of the disclosure, the first device may determine a transmit power required for the SL PRS transmission during the overlapped time period, and may also determine a transmit power required for the UL transmission during the overlapped time period. For example, the transmit power for the SL PRS transmission and the transmit power for the UL transmission may be determined respectively based on configuration information of the SL PRS transmission and the UL transmission. After determining the respective transmit powers of the SL PRS transmission and the UL transmission, the transmit powers are summed up to obtain the required total transmit power of the first device.

At step S604, in a case that the total transmit power is greater than a power threshold, a priority of the UL transmission is determined.

In a case that the total transmit power is greater than the power threshold, it indicates that there is a transmission conflict between the SL PRS transmission and the UL transmission that are simultaneously performed, and the first device needs to determine the priority of the UL transmission in order to determine the first priority relationship between the two kinds of transmission.

In a case that the total transmit power is lower than the power threshold, it indicates that there is no transmission conflict between the SL PRS transmission and the UL transmission that are simultaneously performed, and the first device may perform the two kinds of transmission directly according to their respective configurations without determining the first priority relationship between the two kinds of transmission.

The process of determining the priority of the UL transmission by the first device can be referred to the description of related contents in the above embodiments, which will not be repeated here.

It should be noted that the power threshold may be agreed upon by a protocol or configured by a network device. For example, the power threshold may be a maximum transmit power PCMAX allowed for the first device.

At step S605, a first priority relationship between the SL PRS transmission and the UL transmission is determined according to the priority of the SL PRS transmission and the priority of the UL transmission.

Detailed description of step S605 can be referred to the description of related contents in the above embodiments, and will not be repeated here.

At step S606, in response to the first priority relationship being that the priority of the SL PRS transmission is higher than the priority of the UL transmission, a transmit power of the SL PRS transmission is maintained and a transmit power of the UL transmission is reduced, to limit the total transmit power to be less than or equal to the power threshold.

That is, if the priority of the SL PRS transmission is higher than that of the UL transmission, the transmit power of the SL PRS transmission between the first device and the second device is maintained, and the transmit power of the UL transmission between the first device and another device is reduced, so that the sum of the two transmission powers, i.e., the total transmit power, is less than or equal to the power threshold.

At step S607, in response to the first priority relationship being that the priority of the SL PRS transmission being lower than the priority of the UL transmission, a transmit power of the UL transmission is maintained and a transmit power of the SL PRS transmission is reduced, to limit the total transmit power to be less than or equal to the power threshold.

That is, if the priority of the SL PRS transmission is lower than that of the UL transmission, the transmit power of the SL PRS transmission between the first device and the second device is maintained, and the transmit power of the UL transmission between the first device and another device is reduced, so that the sum of the two transmission powers, i.e., the total transmit power, is less than or equal to the power threshold.

In the embodiments of the disclosure, the priority information of the SL PRS transmission is determined, and the SL PRS transmission is performed with the second device according to the priority information of the SL PRS transmission. In the embodiments of the disclosure, the priority information is configured for the SL PRS transmission, and the SL PRS transmission is performed based on the priority information, which makes the SL PRS transmission more accurate and is beneficial to improving the rationality of the SL PRS transmission. Moreover, when there is a transmission conflict between the SL PRS transmission and the UL transmission, the transmission conflict can be solved based on the priority relationship between the two kinds of transmission, which reduces the conflict risk between the SL PRS transmission and the UL transmission, ensures that the transmission with a higher priority in the SL PRS transmission and the UL transmission is performed, and reduces the packet loss.

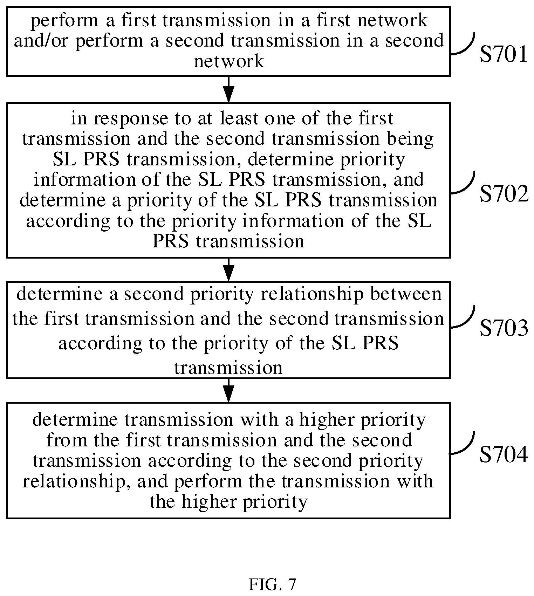

FIG. 7 is a flowchart of an SL PRS transmission method provided by an embodiment of the disclosure. The SL PRS transmission method is performed by a first device. As illustrated in FIG. 7, the method includes but is not limited to the following steps.

At step S701, a first transmission is performed in a first network and/or a second transmission is performed in a second network.

Optionally, the first network may perform different transmission in two different communication networks, the first network in the two communication networks may be an evolved universal terrestrial radio access (E-UTRA) network, and the second network may be an NR network. Alternatively, the first network is an LTE network, and the second network is an NR network.

In the embodiments of the disclosure, the first device may perform the first transmission, i.e., first sending/receiving, on the first network and/or simultaneously perform the second transmission, i.e., second sending/receiving, on the second network.

At step S702, in response to at least one of the first transmission or the second transmission being SL PRS transmission, priority information of the SL PRS transmission is determined, and a priority of the SL PRS transmission is determined according to the priority information of the SL PRS transmission.

At least one of the first transmission or the second transmission is the SL PRS transmission, or the first transmission and the second transmission both are the SL PRS transmission, or one of the first transmission and the second transmission is the SL PRS transmission and the other is UL transmission. The introduction of the UL transmission can be referred to the description of related contents in the above-mentioned embodiments, which will not be repeated here.

In the embodiments of the disclosure, in order to avoid a transmission conflict between the first transmission and the second transmission, the first device may determine a second priority relationship between the first transmission and the second transmission. At least one of the first transmission and the second transmission is the SL PRS transmission, and the first device determines the priority of the SL PRS transmission according to the priority information of the SL PRS transmission. The processes of determining the priority information of the SL PRS transmission and determining the priority of the SL PRS transmission according to the priority information can be referred to the description of related contents in the above embodiments, and will not be repeated here.

At step S703, a second priority relationship between the first transmission and the second transmission is determined according to the priority of the SL PRS transmission.

Optionally, when the first transmission and the second transmission both are SL PRS transmission, the second priority relationship between the first transmission and the second transmission is determined directly based on the priorities corresponding to the two SL PRS transmission.

Optionally, in a case that one of the first transmission and the second transmission is the SL PRS transmission and the other is the UL transmission, the priority of the UL transmission is determined. The first device determines the second priority relationship between the first transmission and the second transmission based on the priority of the SL PRS transmission and the priority of the UL transmission.

At step S704, transmission with a higher priority is determined from the first transmission and the second transmission according to the second priority relationship, and the transmission with the higher priority is performed.

After determining the second priority relationship between the first transmission and the second transmission, the first device performs the SL PRS transmission with the second device or performs the UL transmission with another device based on the second priority relationship.

In a case that the first transmission and the second transmission both are SL PRS transmission, SL PRS transmission with a higher priority is determined from the first transmission and the second transmission according to the second priority relationship, and then the SL PRS transmission with the higher priority is performed.

In a case that one of the first transmission and the second transmission is the SL PRS transmission and the other is the UL transmission, transmission with a higher priority is determined from the first transmission and the second transmission according to the second priority relationship, and then the transmission with the higher priority is performed. For example, the first transmission is the SL PRS transmission and the second transmission is the UL transmission, if the priority of the first transmission is higher than that of the second transmission, the SL PRS transmission corresponding to the first transmission is sent to the second device; if the priority of the first transmission is lower than that of the second transmission, the UL transmission corresponding to the second transmission is sent to the other device.

It should be noted that the first device may determine start timings of the first transmission and the second transmission, and then determine an earlier start timing from the start timings. In a case that the priorities of the first transmission and the second transmission are determined before the earlier start timing, transmission with a higher priority is selected from the first transmission and the second transmission based on the determined priorities of the first transmission and the second transmission and then the transmission with the higher priority is performed. That is, when the priorities of the first transmission and the second transmission are determined before the earlier start timing, the first device does not need to determine the priorities of the first transmission and the second transmission according to the priorities of the SL PRSs, and may directly select the one with a higher priority from the two transmission according to the previously determined priorities of the first transmission and the second transmission and then perform the transmission the higher priority.

Optionally, the first device may determine the priorities of the first transmission and the second transmission for a time period T before the earlier start timing. For example, the time period T may be 4ms, or configured or defined by the first device itself. Optionally, the time period T may be indicated separately for the SL PRS, or configured through a second device, a base station or an LMF network element.

In the embodiments of the disclosure, when the first transmission and the second transmission are performed simultaneously, the second priority relationship between the two kinds of transmission is determined based on the priority information of the SL PRS transmission, and the transmission conflict between the two transmission can be solved based on the second priority relationship, which reduces the risk of conflict between the first transmission and the second transmission, ensures that the transmission with a higher priority in the first transmission and the second transmission is performed, and reduces the packet loss.

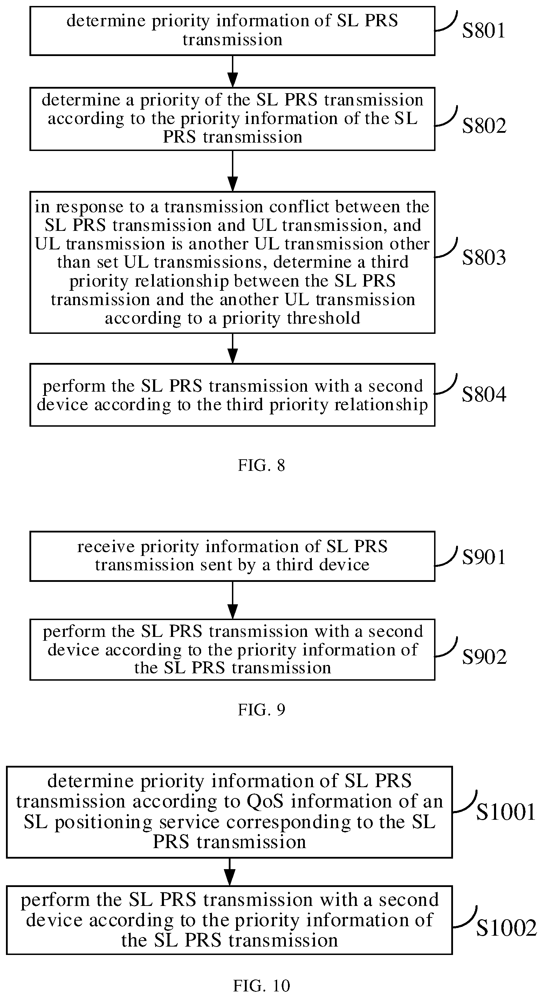

FIG. 8 is a flowchart of an SL PRS transmission method provided by an embodiment of the disclosure. The SL PRS transmission method is performed by a first device. As illustrated in FIG. 8, the method includes but is not limited to the following steps.

At step S801, priority information of SL PRS transmission is determined.

At step S802, a priority of the SL PRS transmission is determined according to the priority information of the SL PRS transmission.

Detailed description of steps S801-S802 can be referred to the description of related contents in the above embodiments, and will not be repeated here.

At step S803, in response to a transmission conflict between the SL PRS transmission and UL transmission, and the UL transmission is another UL transmission other than set UL transmissions, a third priority relationship between the SL PRS transmission and the other UL transmission is determined according to a priority threshold.

The detailed introduction of the transmission conflict between the SL PRS transmission and the UL transmission can be referred to the description of relevant contents in the above embodiments, which will not be repeated here.

It should be noted that the set UL transmissions include transmission of a PRACH, transmission and retransmission of an RAR UL grant scheduled PUSCH, transmission and retransmission of a PUSCH corresponding to a Type-2 random access, transmission of a PUCCH carrying an RAR or SL HARQ-ACK, or transmission of a PUCCH carrying DCI scrambled by a TC-RNTI. In the embodiments of the disclosure, the UL transmission may be another UL transmission other than the above-mentioned set UL transmissions.

Optionally, in a case that a priority value is negatively correlated with a priority level, if the priority of the SL PRS transmission is lower than the priority threshold, it is determined that the third priority relationship is that the priority of the SL PRS transmission is higher than that of the other UL transmission. Alternatively, if the priority of the SL PRS transmission is higher than the priority threshold, it is determined that the third priority relationship is that the priority of the SL PRS transmission is lower than that of the other UL transmission.

Optionally, in a case that a priority value is positively correlated with a priority level, if the priority of the SL PRS transmission is higher than the priority threshold, it is determined that the third priority relationship is that the priority of the SL PRS transmission is higher than that of the other UL transmission. Alternatively, if the priority of the SL PRS transmission is lower than the priority threshold, it is determined that the third priority relationship is that the priority of the SL PRS transmission is lower than that of the other UL transmission.

It should be noted that the priority threshold may be configured separately for the SL PRS. Optionally, the priority threshold may be agreed upon by a protocol or determined by a network indication.

In some implementations, the other UL transmission may not be a PUSCH or a PUCCH with a specified priority index. For example, the specified priority index may be index 1. As an example, if the priority value is negatively correlated with the priority level, and the priority of the SL PRS transmission is lower than the priority threshold, it is determined that the third priority relationship is that the priority of the SL PRS transmission is higher than that of the other UL transmission; or if the priority of the SL PRS transmission is higher than the priority threshold, it is determined that the third priority relationship is that the priority of the SL PRS transmission is lower than that of the other UL transmission. That is, if the other UL transmission is not a PUSCH or a PUCCH with the priority index 1, and the priority value of the SL PRS transmission is less than the priority threshold of the SL, it is determined that the SL PRS transmission has a higher priority than the other UL transmission; otherwise, the other UL transmission has a higher priority.

In yet other implementations, the other UL transmission may be a PUSCH or a PUCCH with a specified priority index, in which case the priority threshold is an SL priority threshold of an ultra reliable low latency communication (UL-URLLC) service. It should be noted that the priority threshold of UL-URLLC service may be configured separately for the SL PRS. Optionally, the priority threshold may be determined based on a protocol or network indication.

At step S804, the SL PRS transmission is performed with a second device according to the third priority relationship.

After determining the third priority relationship between the SL PRS transmission and the other UL transmission, the first device may perform the SL PRS transmission with the second device based on the third priority relationship. If the third priority relationship is that the priority of the SL PRS transmission is higher than that of the UL transmission, the SL PRS transmission is performed with the second device preferentially. If the third priority relationship is that the priority of the SL PRS transmission is lower than that of the UL transmission, the UL transmission may be performed with the other device preferentially.

In the embodiment of the disclosure, the priority information is configured for the SL PRS transmission, and the SL PRS transmission is performed based on the priority information, which makes the SL PRS transmission more accurate and is beneficial to improving the rationality of the SL PRS transmission. When there is a transmission conflict between the SL PRS transmission and the UL transmission, the third priority relationship between the two kinds of transmission is determined based on the SL transmission threshold, and the transmission conflict can be solved based on the third priority relationship, which reduces the conflict risk between the SL PRS transmission and the UL transmission, ensures that the transmission with a higher priority in the SL PRS transmission and the UL transmission is performed, and reduces the packet loss.

FIG. 9 is a flowchart of an SL PRS transmission method provided by an embodiment of the disclosure. The SL PRS transmission method is performed by a first device. As illustrated in FIG. 9, the method includes but is not limited to the following steps.

At step S901, priority information of SL PRS transmission sent by a third device is received.

Optionally, the third device may be at least one of a second device directly connected to the first device, a positioning assistance device or a network device.

Optionally, the priority information of the SL PRS transmission may include a combination of one or more of a priority value of SL PRS transmission, a value range of a priority, an SL PRS ID, an SL PRS set ID, priority information of each SL PRS ID, priority information of each SL PRS set ID, priority information of SL PRS sending and priority information of SL PRS receiving. Optionally, SL PRS transmission includes SL PRS sending and SL PRS receiving. The third device may send the priority of the SL PRS sending and the priority of the SL PRS receiving to the first device respectively. Correspondingly, the first device may receive the priority of the SL PRS sending and the priority of the SL PRS receiving respectively.

Optionally, in a case that the third device is the second device, signaling interaction is performed with the second device through one of an SL long term evolution positioning protocol (SL LPP) message, an SL interface (PC5-S) message, a radio resource control (RRC) message or SL control information (SCI).

Optionally, in a case that the third device is a positioning assistance device, signaling interaction is performed with the positioning assistance device through an LPP message. The signaling interaction at least includes sending of the priority information of the SL PRS transmission. It should be noted that if the positioning assistance device is an LMF network element, the signaling interaction between the first device and the LMF needs to be performed through a base station.

Optionally, in a case that the third device is a network device, signaling interaction with the network device is performed through one of a system broadcast message, an RRC reconfiguration message, an RRC release message, DCI or a media access control-control element (MAC-CE) message.

It should be noted that the above signaling interaction at least includes sending of the priority information of the SL PRS transmission. Optionally, the signaling interaction may also include sending of information or parameters required in the positioning process, such as positioning information.

At step S902, the SL PRS transmission is performed with a second device according to the priority information of the SL PRS transmission.

In the embodiments of the disclosure, the first device performs the SL PRS transmission with the second device according to the priority information of the SL PRS transmission. For example, in a case that the SL PRS transmission and the UL transmission are to be performed, the SL PRS transmission and the UL transmission are performed sequentially based on the priorities of the SL PRS transmission and the UL transmission, or transmission with a higher priority is selected form the SL PRS transmission and the UL transmission and then the transmission with the higher priority is performed. For another example, in a case that more than one SL PRS transmission is to be performed, the more than one SL PRS transmission is performed sequentially based on the priority of each SL PRS, or SL PRS transmission with a higher priority among the more than one SL PRS transmission is selected and performed.

When performing both the SL PRS transmission and the UL transmission, there may be transmission conflict between the SL PRS transmission and the UL transmission. In the case of transmission conflict, the process of performing the SL PRS transmission with the second device can be referred to the related contents in the above embodiments, and will not be described here.

In the embodiments of the disclosure, the priority information is configured for the SL PRS transmission, and the SL PRS transmission is performed based on the priority information, which makes the SL PRS transmission more accurate and is beneficial to improving the rationality of the SL PRS transmission. When there is a transmission conflict between the SL PRS transmission and the UL transmission, the transmission conflict can be solved based on the priority relationship, which reduces the conflict risk between the SL PRS transmission and the UL transmission, ensures that the transmission with a higher priority in the SL PRS transmission and the UL transmission is performed, and reduces the packet loss.

FIG. 10 is a flowchart of an SL PRS transmission method provided by an embodiment of the disclosure. The SL PRS transmission method is performed by a first device. As illustrated in FIG. 10, the method includes but is not limited to the following steps.

At step S1001, priority information of SL PRS transmission is determined according to QoS information of an SL positioning service corresponding to the SL PRS transmission.

The first device may receive the QoS information of the SL positioning service indicated by the network device. The QoS reflects respective priorities of different data streams. After receiving the QoS information of the SL positioning service, the first device may determine the priority information of the SL PRS transmission according to the QoS information.

Optionally, the priority information of the SL PRS transmission may include a combination of one or more of a priority value of SL PRS transmission, a value range of a priority, an SL PRS ID, an SL PRS set ID, priority information of each SL PRS ID, priority information of each SL PRS set ID, priority information of SL PRS sending and priority information of SL PRS receiving. Optionally, the SL PRS transmission includes SL PRS sending and SL PRS receiving. The first device may determine the priority of the SL PRS sending and the priority of the SL PRS receiving respectively according to the QoS.

At step S1002, the SL PRS transmission is performed with a second device according to the priority information of the SL PRS transmission.

The detailed description of steps S1001-1002 can be referred to the description of related contents in the above embodiments, and will not be repeated here.

In the embodiments of the disclosure, the priority information is configured for the SL PRS transmission, and the SL PRS transmission is performed based on the priority information, which makes the SL PRS transmission more accurate and is beneficial to improving the rationality of the SL PRS transmission. When there is a transmission conflict between the SL PRS transmission and the UL transmission, the transmission conflict can be solved based on the priority relationship, which reduces the conflict risk between the SL PRS transmission and the UL transmission, ensures that the transmission with a higher priority in the SL PRS transmission and the UL transmission is performed, and reduces the packet loss.

In the above embodiments of the disclosure, the methods of the embodiments of the disclosure are introduced from the perspective of the first device. In order to realize the functions in the methods of the embodiments of the disclosure, the first device may include a hardware structure and a software module, and the above functions are realized in the form of the hardware structure, the software module, or a combination of the hardware structure and the software module. A certain function of the above functions may be implemented in a hardware structure, a software module, or a combination of the hardware structure and the software module.

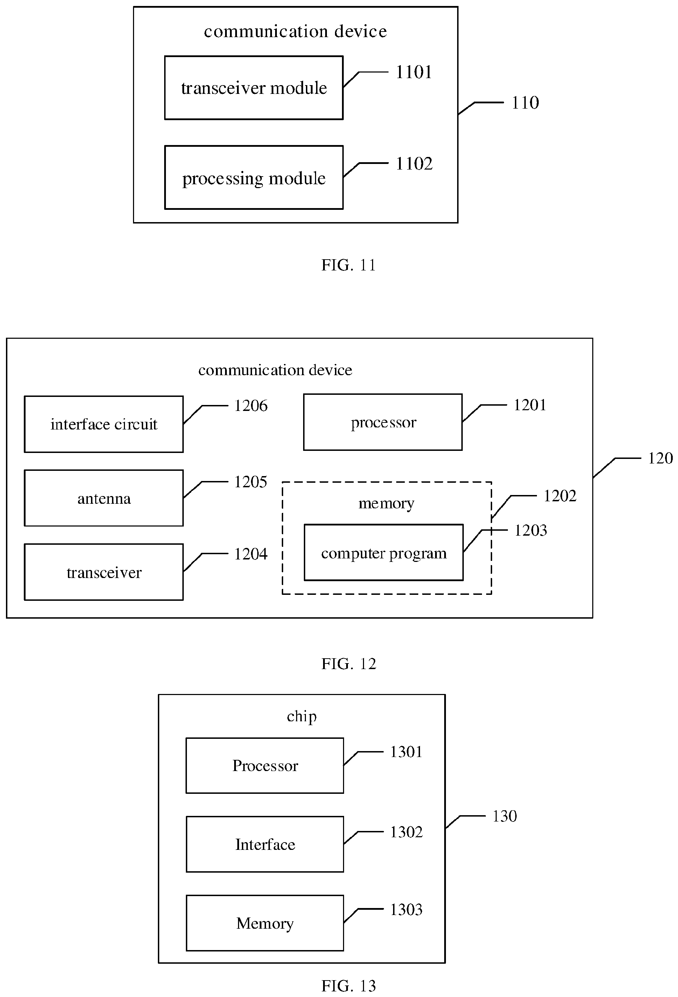

FIG. 11 is a schematic diagram of a communication device 110 provided by an embodiment of the disclosure. The communication device 110 shown in FIG. 11 includes a transceiver module 1101 and a processing module 1102. The transceiver module 1101 may include a sending module and/or a receiving module. The sending module is used for realizing the sending function, and the receiving module is used for realizing the receiving function. The transceiver module 1101 may realize the sending function and/or the receiving function.

The communication device 110 may be a first device, a device in the first device, or a device that can be used together with the first device.

In a case that the communication device 110 is the first device,
the processing module 1102 is configured to determine priority information of SL PRS transmission, and
the transceiver module 1101 is configured to perform the SL PRS transmission with a second device according to the priority information of the SL PRS transmission.

Optionally, the processing module 1102 is further configured to: determine a priority of the SL PRS transmission according to the priority information of the SL PRS transmission, and perform the SL PRS transmission with the second device according to the priority of the SL PRS transmission.

Optionally, the transceiver module 1101 is further configured to: in response to a transmission conflict between UL transmission and the SL PRS transmission of the first device, determine a priority of the UL transmission; determine a first priority relationship between the SL PRS transmission and the UL transmission according to the priority of the SL PRS transmission and the priority of the UL transmission; and perform the SL PRS transmission with the second device according to the first priority relationship.

Optionally, in a case that the SL PRS transmission and the UL transmission are unable to be performed simultaneously, the transceiver module 1101 is further configured to: in response to the priority of the SL PRS transmission being higher than the priority of the UL transmission, perform the SL PRS transmission with the second device; and/or, in response to the priority of the SL PRS transmission being lower than the priority of the UL transmission, perform the UL transmission with another device.

Optionally, in a case that the SL PRS transmission and the UL transmission are able to be performed simultaneously but are overlapped in time, the transceiver module 1101 is further configured to: in response to the priority of the SL PRS transmission being higher than the priority of the UL transmission, perform the SL PRS transmission with the second device; and/or in response to the priority of the SL PRS transmission being lower than the priority of the UL transmission, perform the UL transmission with another device.

Optionally, in a case that a total transmit power of the first device required for performing the SL PRS transmission and the UL transmission during the overlapped time is greater than a power threshold, the transceiver module 1101 is further configured to: in response to the priority of the SL PRS transmission being higher than the priority of the UL transmission, maintain a transmit power of the SL PRS transmission and reduce a transmit power of the UL transmission, to limit the total transmit power to be less than or equal to the power threshold; or, in response to the priority of the SL PRS transmission being lower than the priority of the UL transmission, maintain a transmit power of the UL transmission and reduce a transmit power of the SL PRS transmission, to limit the total transmit power to be less than or equal to the power threshold.

Optionally, the first device performs first transmission in a first network and/or performs second transmission in a second network, and at least one of the first transmission or the second transmission is the SL PRS transmission, and the transceiver module 1101 is further configured to: determine a second priority relationship between the first transmission and the second transmission according to the priority of the SL PRS transmission; and determine transmission with a higher priority from the first transmission and the second transmission according to the second priority relationship, and perform the transmission with the higher priority.

Optionally, the processing module 1102 is further configured to: determine start timings of the first transmission and the second transmission, and determine an earlier start timing from the start timings.

Optionally, the transceiver module 1101 is further configured to: in response to priorities of the first transmission and the second transmission being determined before the earlier start timing, select and perform transmission with a higher priority from the first transmission and the second transmission based on the determined priorities of the first transmission and the second transmission.

Optionally, the UL transmission includes one of following set UL transmissions: transmission of a PRACH, transmission and retransmission of an RAR UL grant scheduled PUSCH, transmission and retransmission of a PUSCH corresponding to a Type-2 random access, transmission of a PUCCH carrying an RAR or SL HARQ-ACK, or transmission of a PUCCH indicated carrying DCI scrambled by a TC-RNTI.

Optionally, the UL transmission further includes another UL transmission in addition to the set UL transmissions, and the processing module 1102 is further configured to: determine a third priority relationship between the SL PRS transmission and the other UL transmission according to a priority threshold.

Optionally, the processing module 1102 is further configured to: in a case that a priority value is negatively correlated with a priority level, in response to the priority of the SL PRS transmission being lower than the priority threshold, determine that the priority of the SL PRS transmission is higher than a priority of the other UL transmission; or, in response to the priority of the SL PRS transmission being higher than the priority threshold, determine that the priority of the SL PRS transmission is lower than the priority of the other UL transmission;

in a case that the priority value is positively correlated with the priority level, in response to the priority of the SL PRS transmission being higher than the priority threshold, determine that the priority of the SL PRS transmission is higher than the priority of the other UL transmission; or, in response to the priority of the SL PRS transmission being lower than the priority threshold, determine that the priority of the SL PRS transmission is lower than the priority of the other UL transmission.

Optionally, the other UL transmission is not a PUSCH or a PUCCH with a specified priority index; or, the other UL transmission is a PUSCH or a PUCCH with the specified priority index, and the priority threshold is an SL priority threshold of an UL-URLLC service.

Optionally, the transceiver module 1101 is further configured to: receive the priority information of the SL PRS transmission sent by a third device, in which the third device is at least one of the second device, a positioning assistance device, or a network device.

Optionally, the processing module 1102 is further configured to: determine the priority information of the SL PRS transmission according to QoS information of an SL positioning service corresponding to the SL PRS transmission.

Optionally, the transceiver module 1101 is further configured to: receive priority information of SL PRS sending and priority information of SL PRS receiving sent by the third device respectively.

Optionally, the processing module 1102 is further configured to: determine the priority information of the SL PRS sending and the priority information of the SL PRS receiving respectively according to the QoS information.

Optionally, the priority information of the SL PRS transmission includes at least one of: a priority value and/or a value range of SL PRS transmission; an SL PRS ID or an SL PRS set ID; QoS information of an SL positioning service corresponding to an SL PRS; priority information of each SL PRS ID or priority information of each SL PRS set ID; or priority information of SL PRS sending and priority information of SL PRS receiving.

Optionally, the SL PRS transmission includes SL PRS sending and SL PRS receiving, and the processing module 1102 is further configured to: determine at least one of a priority of the SL PRS sending and a priority of the SL PRS receiving.

Optionally, in response to the third device being the second device, the transceiver module 1101 is further configured to: perform signaling interaction with the second device through one of an SL LPP message, an SL interface (PC5-S) message, an RRC message or SCI, in which the signaling interaction at least includes sending of the priority information of the SL PRS transmission.

Optionally, in response to the third device being the positioning assistance device, the transceiver module 1101 is further configured to: perform signaling interaction with the positioning assistance device through an LPP message, in which the signaling interaction at least includes sending of the priority information of the SL PRS transmission.

Optionally, in response to the third device being a network device, the transceiver module 1101 is further configured to: perform signaling interaction with the network device through one of a system broadcast message, an RRC reconfiguration message, an RRC release message, DCI or a MAC-CE message, in which the signaling interaction at least includes sending of the priority information of the SL PRS transmission.

In the embodiments of the disclosure, the priority information is configured for the SL PRS transmission, and the SL PRS transmission is performed based on the priority information, which makes the SL PRS transmission more accurate and is beneficial to improving the rationality of the SL PRS transmission. When there is a transmission conflict between the SL PRS transmission and the UL transmission, the transmission conflict can be solved based on the priority relationship, which reduces the conflict risk between the SL PRS transmission and the UL transmission, ensures that the transmission with a higher priority in the SL PRS transmission and the UL transmission is performed, and reduces the packet loss.

FIG. 12 is a schematic diagram of another communication device 120 provided by an embodiment of the disclosure. The communication device 120 may be a network device or a terminal, or may be a chip, a chip system or a processor that supports the network device to realize the above-described method, or may be a chip, a chip system or a processor that supports the terminal to realize the above-described method. The device may be used to realize the methods described in the above method embodiments with reference to the description of the above-described method embodiments.

The communication device 120 may include one or more processors 1201. The processor 1201 may be a general purpose processor or a dedicated processor, such as, a baseband processor and a central processor. The baseband processor is used for processing communication protocols and communication data. The central processor is used for controlling the communication device (e.g., a base station, a baseband chip, a terminal, a terminal chip, a DU, or a CU), executing computer programs, and processing data of the computer programs.

Optionally, the communication device 120 may include one or more memories 1202 on which a computer program 1203 may be stored. The processor 1201 executes the computer program 1203 to cause the communication device 120 to perform the methods described in the above method embodiments. Optionally, the memory 1202 may also store data. The communication device 120 and the memory 1202 may be provided separately or may be integrated together.

Optionally, the communication device 120 may also include a transceiver 1204 and an antenna 1205. The transceiver 1204 may be referred to as a transceiver unit, a transceiver machine, or a transceiver circuit, for realizing a transceiver function. The transceiver 1204 may include a receiver and a transmitter. The receiver may be referred to as a receiving machine or a receiving circuit, for realizing the receiving function. The transmitter may be referred to as a transmitter machine or a transmitting circuit, for realizing the transmitting function.

Optionally, the communication device 120 may also include one or more interface circuits 1206. The interface circuits 1206 are used to receive code instructions and transmit the code instructions to the processor 1201. The processor 1201 runs the code instructions to cause the communication device 120 to perform the method described in the method embodiments.

The communication device 120 is a terminal used to implement the functions of the terminal in the above embodiments.

The communication device 120 is a network device used to implement the functions of the network device in the above embodiments.

In an implementation, the processor 1201 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor 1201 may store a computer program 1203. When the computer program 1203 runs on the processor 1201, the communication device 120 is caused to perform the methods described in the method embodiments above. The computer program 1203 may be solidified in the processor 1201, and in such case the processor 1201 may be implemented by hardware.

In an implementation, the communication device 120 may include circuits. The circuits may implement the sending, receiving or communicating function in the preceding method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a network device or a terminal, but the scope of the communication device described in the disclosure is not limited thereto, and the structure of the communication device may not be limited by FIG. 12. The communication device may be a stand-alone device or may be part of a larger device. For example, the described communication device may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

The case that the communication device may be a chip or a chip system can be referred to the schematic diagram of the chip shown in FIG. 13. The chip shown in FIG. 13 includes a processor 1301 and an interface 1302. There may be one or more processors 1301, and there may be multiple interfaces 1302.

For the case that the chip is used to realize the function of the first device in the embodiments of the disclosure,
the processor 1301 is configured to determine priority information of SL PRS transmission,
the interface 1302 is configured to perform the SL PRS transmission with a second device according to the priority information of the SL PRS transmission.

Optionally, the processor 1301 is configured to: determine a priority of SL PRS transmission according to the priority information of the SL PRS transmission; and perform the SL PRS transmission with the second device according to the priority of the SL PRS transmission.

Optionally, the interface 1302 is configured to: in response to a transmission conflict between UL transmission and the SL PRS transmission of the first device, determine a priority of the UL transmission; determine a first priority relationship between the SL PRS transmission and the UL transmission according to the priority of the SL PRS transmission and the priority of the UL transmission; and perform the SL PRS transmission with the second device according to the first priority relationship.

Optionally, in a case that the SL PRS transmission and the UL transmission are unable to be performed simultaneously, the interface 1302 is configured to: in response to the priority of the SL PRS transmission being higher than the priority of the UL transmission, perform the SL PRS transmission with the second device; or in response to the priority of the SL PRS transmission being lower than the priority of the UL transmission, perform UL transmission with another device.

Optionally, in a case that the SL PRS transmission and the UL transmission are able to be performed simultaneously but are overlapped in time, the interface 1302 is configured to: in response to the priority of the SL PRS transmission being higher than the priority of the UL transmission, perform the SL PRS transmission with the second device; and/or in response to the priority of the SL PRS transmission being lower than the priority of the UL transmission, perform the UL transmission with another device.

Optionally, in a case that a total transmit power of the first device required for performing the SL PRS transmission and the UL transmission during the overlapped time is greater than a power threshold, the interface 1302 is configured to: in response to the priority of the SL PRS transmission being higher than the priority of the UL transmission, maintain a transmit power of the SL PRS transmission and reduce a transmit power of the UL transmission, to limit the total transmit power to be less than or equal to the power threshold; or, in response to the priority of the SL PRS transmission being lower than the priority of the UL transmission, maintain a transmit power of the UL transmission and reduce a transmit power of the SL PRS transmission, to limit the total transmit power to be less than or equal to the power threshold.

Optionally, the first device performs first transmission in a first network and/or performs second transmission in a second network, and at least one of the first transmission or the second transmission is the SL PRS transmission, and the interface 1302 is configured to: determine a second priority relationship between the first transmission and the second transmission according to the priority of the SL PRS transmission; and determine transmission with a higher priority from the first transmission and the second transmission according to the second priority relationship, and perform the transmission with the higher priority.

Optionally, the processor 1301 is configured to: determine start timings of the first transmission and the second transmission, and determine an earlier start timing from the start timings.

Optionally, the interface 1302 is configured to: in response to priorities of the first transmission and the second transmission being determined before the earlier start timing, select and perform the transmission with the higher priority from the first transmission and the second transmission based on the determined priorities of the first transmission and the second transmission.

Optionally, the UL transmission includes one of following set UL transmissions: transmission of a PRACH, transmission and retransmission of an RAR UL grant scheduled PUSCH, transmission and retransmission of a PUSCH corresponding to a Type-2 random access, transmission of a PUCCH carrying an RAR or SL HARQ-ACK, or transmission of a PUCCH indicated carrying DCI scrambled by a TC-RNTI.

Optionally, the UL transmission further includes another UL transmission in addition to the set UL transmissions, and the processor 1301 is further configured to: determine a third priority relationship between the SL PRS transmission and the other UL transmission according to a priority threshold.

Optionally, the processor 1301 is further configured to: in a case that a priority value is negatively correlated with a priority level, in response to the priority of the SL PRS transmission being lower than the priority threshold, determine that the priority of the SL PRS transmission is higher than a priority of the other UL transmission; or, in response to the priority of the SL PRS transmission being higher than the priority threshold, determine that the priority of the SL PRS transmission is lower than the priority of the other UL transmission;
in a case that the priority value is positively correlated with the priority level, in response to the priority of the SL PRS transmission being higher than the priority threshold, determine that the priority of the SL PRS transmission is higher than the priority of the other UL transmission; or, in response to the priority of the SL PRS transmission being lower than the priority threshold, determine that the priority of the SL PRS transmission is lower than the priority of the other UL transmission.

Optionally, the other UL transmission is not a PUSCH or a PUCCH with a specified priority index; or, the other UL transmission is a PUSCH or a PUCCH with the specified priority index, and the priority threshold is an SL priority threshold of an UL-URLLC service.

Optionally, the interface 1302 is configured to: receive the priority information of the SL PRS transmission sent by a third device, in which the third device is at least one of the second device, a positioning assistance device, or a network device. Or,

Optionally, the processor 1301 is configured to: determine the priority information of the SL PRS transmission according to QoS information of an SL positioning service corresponding to the SL PRS transmission.

Optionally, the interface 1302 is configured to: receive priority information of SL PRS sending and priority information of SL PRS receiving sent by the third device respectively.

Optionally, the processor 1301 is configured to: determine the priority information of the SL PRS sending and the priority information of the SL PRS receiving respectively according to the QoS information.

Optionally, the priority information of the SL PRS transmission includes at least one of: a priority value and/or a value range of SL PRS transmission; an SL PRS ID or an SL PRS set ID; QoS information of an SL positioning service corresponding to the SL PRS transmission; priority information of each SL PRS ID or priority information of each SL PRS set ID; or priority information of SL PRS sending and priority information of SL PRS receiving.

Optionally, the SL PRS transmission includes SL PRS sending and SL PRS receiving, and the processor 1301 is further configured to: determine at least one of a priority of SL PRS sending and a priority of SL PRS receiving.

Optionally, in response to the third device being the second device, the interface 1302 is configured to: perform signaling interaction with the second device through one of an SL LPP message, an SL interface (PC5-S) message, an RRC message and SCI, in which the signaling interaction at least includes sending of the priority information of the SL PRS transmission.

Optionally, in response to the third device being the positioning assistance device, the transceiver module 1101 is further configured to: perform signaling interaction with the positioning assistance device through an LPP message, in which the signaling interaction at least includes sending of the priority information of the SL PRS transmission.

Optionally, in response to the third device being a network device, the interface 1302 is further configured to: perform signaling interaction with the network device through one of a system broadcast message, an RRC reconfiguration message, an RRC release message, DCI or a MAC-CE message, in which the signaling interaction at least includes sending of the priority information of the SL PRS transmission.

Optionally, the chip also includes a memory 1303 for storing necessary computer programs and data.

In the embodiments of the disclosure, the priority information is configured for the SL PRS transmission, and the SL PRS transmission is performed based on the priority information, which makes the SL PRS transmission more accurate and is beneficial to improving the rationality of the SL PRS transmission. When there is a transmission conflict between the SL PRS transmission and the UL transmission, the transmission conflict can be solved based on the priority relationship, which reduces the conflict risk between the SL PRS transmission and the UL transmission, ensures that the transmission with a higher priority in the SL PRS transmission and the UL transmission is performed, and reduces the packet loss.

It is understood by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as beyond the scope of protection of the embodiments of the disclosure.

The embodiments of the disclosure also provide a communication system. The system includes a communication device acting as a terminal in the aforementioned embodiment of FIG. 8 and a communication device acting as a network device. Alternatively, the system includes a communication device acting as a terminal in the aforementioned embodiment of FIG. 9 and a communication device acting as a network device.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understand that first, second, and other various numerical numbers involved in the disclosure are only described for the convenience of differentiation, and are not used to limit the scope of the embodiments of the disclosure, or used to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that can be understood by the communication device, and the values or representations of the parameters may be other values or representations that can be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, pre-define, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

The above are only specific implementations of the disclosure, but the scope of protection of the disclosure is not limited thereto. Those skilled in the art familiar to this technical field can easily think of changes or substitutions within the technical scope disclosed by the disclosure, which shall be covered by the scope of protection of the disclosure. Therefore, the scope of protection of the disclosure shall be governed by the scope of protection of the attached claims.

## Claims

1. A sidelink (SL) positioning reference signal (PRS) transmission method, performed by a first device, comprising:
determining priority information of SL PRS transmission; and
performing the SL PRS transmission with a second device according to the priority information of the SL PRS transmission.

2. The method of claim 1, wherein performing the SL PRS transmission with the second device according to the priority information of the SL PRS transmission comprises:
determining a priority of the SL PRS transmission according to the priority information of the SL PRS transmission; and
performing the SL PRS transmission with the second device according to the priority of the SL PRS transmission.

3. The method of claim 2, wherein performing the SL PRS transmission with the second device according to the priority of the SL PRS transmission comprises:
in response to a transmission conflict between uplink (UL) transmission and the SL PRS transmission of the first device, determining a priority of the UL transmission;
determining a first priority relationship between the SL PRS transmission and the UL transmission according to the priority of the SL PRS transmission and the priority of the UL transmission; and
performing the SL PRS transmission with the second device according to the first priority relationship.

4. The method of claim 3, wherein in a case that the SL PRS transmission and the UL transmission are unable to be performed simultaneously, the method further comprises:
performing transmission according to the priority of the SL PRS transmission and the priority of the UL transmission,
in response to the priority of the SL PRS transmission being higher than the priority of the UL transmission, performing the SL PRS transmission with the second device; and/or
in response to the priority of the SL PRS transmission being lower than the priority of the UL transmission, performing the UL transmission with another device.

5. The method of claim 3, wherein in a case that the SL PRS transmission and the UL transmission are able to be performed simultaneously but are overlapped in time, the method further comprises:
in response to the priority of the SL PRS transmission being higher than the priority of the UL transmission, performing the SL PRS transmission with the second device; and/or
in response to the priority of the SL PRS transmission being lower than the priority of the UL transmission, performing the UL transmission with another device.

6. The method of claim 4, wherein in a case that a total transmit power of the first device required for performing the SL PRS transmission and the UL transmission during an overlapped time is greater than a power threshold, the method further comprises:
in response to the priority of the SL PRS transmission being higher than the priority of the UL transmission, maintaining a transmit power of the SL PRS transmission and reducing a transmit power of the UL transmission, to limit the total transmit power to be less than or equal to the power threshold; or,
in response to the priority of the SL PRS transmission being lower than the priority of the UL transmission, maintaining a transmit power of the UL transmission and reducing a transmit power of the SL PRS transmission, to limit the total transmit power to be less than or equal to the power threshold.

7. The method of claim 2, wherein the first device performs first transmission in a first network and/or performs second transmission in a second network, and at least one of the first transmission or the second transmission is the SL PRS transmission, and performing the SL PRS transmission with the second device according to the priority of the SL PRS transmission comprises:
determining a second priority relationship between the first transmission and the second transmission according to the priority of the SL PRS transmission; and
determining transmission with a higher priority from the first transmission and the second transmission according to the second priority relationship, and performing the transmission with the higher priority.

8. The method of claim 7, further comprising:
determining start timings of the first transmission and the second transmission, and determining an earlier start timing from the start timings;
in response to priorities of the first transmission and the second transmission being determined before the earlier start timing, selecting and performing the transmission with the higher priority from the first transmission and the second transmission based on the determined priorities of the first transmission and the second transmission.

9. The method of claim 3, wherein the UL transmission comprises one of following set UL transmissions:
transmission of a physical random access channel (PRACH);
transmission and retransmission of a random access response (RAR) UL grant scheduled physical UL shared channel (PUSCH);
transmission and retransmission of a PUSCH corresponding to a Type-2 random access;
transmission of a physical uplink control channel (PUCCH) carrying an RAR or SL hybrid automatic repeat request acknowledgement (HARQ-ACK); or
transmission of a PUCCH carrying downlink control information (DCI) scrambled by a temporary cell-radio network temporary identity (TC-RNTI).

10. The method of claim 9, wherein the UL transmission further comprises another UL transmission in addition to the set UL transmissions, and the method further comprises:
determining a third priority relationship between the SL PRS transmission and the other UL transmission according to a priority threshold.

11. The method of claim 10, wherein determining the third priority relationship between the SL PRS transmission and the other UL transmission according to the priority threshold comprises:
in a case that a priority value is negatively correlated with a priority level, in response to the priority of the SL PRS transmission being lower than the priority threshold, determining that the priority of the SL PRS transmission is higher than a priority of the other UL transmission; or
in response to the priority of the SL PRS transmission being higher than the priority threshold, determining that the priority of the SL PRS transmission is lower than the priority of the other UL transmission;
in a case that the priority value is positively correlated with the priority level, in response to the priority of the SL PRS transmission being higher than the priority threshold, determining that the priority of the SL PRS transmission is higher than the priority of the other UL transmission; or
in response to the priority of the SL PRS transmission being lower than the priority threshold, determining that the priority of the SL PRS transmission is lower than the priority of the other UL transmission.

12. The method of claim 11, wherein
the other UL transmission is not a PUSCH or a PUCCH with a specified priority index; or
the other UL transmission is a PUSCH or a PUCCH with the specified priority index, and the priority threshold is an SL priority threshold of an ultra reliable low latency communication (UL-URLLC) service.

13. The method of any one of claims 1-12, wherein determining the priority information of the SL PRS transmission comprises:
receiving the priority information of the SL PRS transmission sent by a third device, wherein the third device is at least one of the second device, a positioning assistance device, or a network device; or
determining the priority information of the SL PRS transmission according to quality of service (QoS) information of an SL positioning service corresponding to the SL PRS transmission.

14. The method of claim 13, wherein determining the priority information of the SL PRS transmission comprises:
receiving priority information of SL PRS sending and priority information of SL PRS receiving sent by the third device respectively; or
determining the priority information of the SL PRS sending and the priority information of the SL PRS receiving respectively according to the QoS information.

15. The method of claim 13, wherein the priority information of the SL PRS transmission comprises at least one of:
a priority value and/or a value range of the SL PRS transmission;
an SL PRS identifier (ID) or an SL PRS set ID;
QoS information of an SL positioning service corresponding to an SL PRS;
priority information of each SL PRS ID or priority information of each SL PRS set ID; or
priority information of SL PRS sending and priority information of SL PRS receiving.

16. The method of claim 15, wherein the SL PRS transmission comprises SL PRS sending and SL PRS receiving, and the method further includes:
determining at least one of a priority of the SL PRS sending or a priority of the SL PRS receiving.

17. The method of claim 13, further comprising:
in response to the third device being the second device, performing signaling interaction with the second device through one of an SL long term evolution positioning protocol (SL LPP) message, an SL interface (PC5-S) message, a radio resource control (RRC) message or SL control information (SCI), wherein the signaling interaction at least comprises sending of the priority information of the SL PRS transmission.

18. The method of claim 13, further comprising:
in response to the third device being the positioning assistance device, performing signaling interaction with the positioning assistance device through an LPP message, wherein the signaling interaction at least comprises sending of the priority information of the SL PRS transmission.

19. The method of claim 13, further comprising:
in response to the third device being the network device, performing signaling interaction with the network device through one of a system broadcast message, an RRC reconfiguration message, an RRC release message, DCI or a media access control-control element (MAC-CE) message, wherein the signaling interaction at least comprises sending of the priority information of the SL PRS transmission.

20. A communication device, comprising:
a processing module, configured to determine priority information of SL PRS transmission; and
a transceiver module, configured to perform the SL PRS transmission with a second device according to the priority information of the SL PRS transmission.

21. A communication device, comprising a processor and a memory having a computer program stored therein, wherein the processor executes the computer program stored in the memory to cause the device to perform the method according to any one of claims 1-19.

22. A computer-readable storage medium for storing instructions, wherein when the instructions are executed, the method according to any one of claims 1-19 is implemented.
